# EUROPEAN PATENT APPLICATION

(11) **EP 4 270 895 A1**
(43) Date of publication of application: **01.11.2023**
(21) Application number: 23168940.7
(22) Date of filing: 20.04.2023
(51) Int. Cl.: H04L 43/50

(54) **NETWORK MANAGEMENT**

(30) Priority: 25.04.2022 FI 20225343
(71) Applicant: Nokia Solutions and Networks Oy, 02610 Espoo (FI)
(72) Inventor: MWANJE, Stephen, 84405 Dorfen (DE); GÖSER, Julian, 89129 Langenau (DE); BANERJEE, Anubhab, 80992 Munich (DE)
(74) Representative: Nokia EPO representatives

(57) **Abstract**

According to an example aspect of the present invention, there is provided an apparatus comprising at least one processing core, at least one memory including computer program code, the at least one memory and the computer program code being configured to, with the at least one processing core, cause the apparatus at least to generate, using a machine learning mechanism, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, and use a block of text as input in the generation of the set of test instructions.

## Description

### FIELD

The present disclosure relates to the field of network, such as communication or computation network, management and testing.

### BACKGROUND

Owing to the complexity of networks and the need for more dependability and reduction of configuration delays, the concept of intent-based networking, IBN, has gained traction as a mechanism through which the network can be controlled via the use of intents. An intent in the context of IBN is a flexible way of specifying required outcomes/goals by an operator without stating explicitly how those outcomes/goals should be achieved. In other words, the network may be configured by instructing it to configure itself in such a manner, that certain, specified technical objectives are achieved without specifying the specific configuration actions needed to achieve the technical objectives. Instead, the methods and solutions for realizing or achieving the specified intent are left to an intent fulfilment system, IFS, which then acts as the provider of the intent-driven management, IDM, service.

Use of intents implies that detailed control of specific network management actions is to an extent yielded away from human operators. However, before the operators can give away such specific control, they need to be sure that the IFS can effectively fulfil the intents as desired, that is, the operator needs to test the IFS with different intents and see if all those intents are processed and fulfilled as desired.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core, at least one memory including computer program code, the at least one memory and the computer program code being configured to, with the at least one processing core, cause the apparatus at least to generate, using a machine learning mechanism, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, and use a block of text as input in the generation of the set of test instructions.

According to a second aspect of the present disclosure, there is provided an apparatus comprising at least one processing core, at least one memory including computer program code, the at least one memory and the computer program code being configured to, with the at least one processing core, cause the apparatus at least to generate, using a test instruction synthesizer, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, use in the generation of the set of test instructions, as input, a plurality of input instructions and a set of rules defining validity of test instructions, and wherein the test instruction synthesizer is configured to generate a test instruction from a first input instruction from among the plurality of input instructions either by replacing an element of the first input instruction with another element or by augmenting the first input instruction with a new element.

According to a second aspect of the present disclosure, there is provided a method comprising generating, using a machine learning mechanism, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, and using a block of text as input in the generation of the set of test instructions.

According to a third aspect of the present disclosure, there is provided a method, comprising generating, using a test instruction synthesizer, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, using in the generation of the set of test instructions, as input, a plurality of input instructions and a set of rules defining validity of test instructions, and wherein the test instruction synthesizer is configured to generate a test instruction from a first input instruction from among the plurality of input instructions either by replacing an element of the first input instruction with another element or by augmenting the first input instruction with a new element.

According to a fourth aspect of the present disclosure, there is provided an apparatus comprising means for generating, using a machine learning mechanism, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, and using a block of text as input in the generation of the set of test instructions.

According to a fifth aspect of the present disclosure, there is provided an apparatus comprising means for generating, using a test instruction synthesizer, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, using in the generation of the set of test instructions, as input, a plurality of input instructions and a set of rules defining validity of test instructions, and wherein the test instruction synthesizer is configured to generate a test instruction from a first input instruction from among the plurality of input instructions either by replacing an element of the first input instruction with another element or by augmenting the first input instruction with a new element.

According to a sixth aspect of the present disclosure, there is provided a non-transitory computer readable medium having stored thereon a set of computer readable instructions that, when executed by at least one processor, cause an apparatus to at least generate, using a machine learning mechanism, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, and use a block of text as input in the generation of the set of test instructions.

According to a seventh aspect of the present disclosure, there is provided a non-transitory computer readable medium having stored thereon a set of computer readable instructions that, when executed by at least one processor, cause an apparatus to at least generate, using a test instruction synthesizer, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, use in the generation of the set of test instructions, as input, a plurality of input instructions and a set of rules defining validity of test instructions, and wherein the test instruction synthesizer is configured to generate a test instruction from a first input instruction from among the plurality of input instructions either by replacing an element of the first input instruction with another element or by augmenting the first input instruction with a new element.

According to an eighth aspect of the present disclosure, there is provided a computer program configured to cause a computer to perform the following, when executed: generating, using a machine learning mechanism, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, and using a block of text as input in the generation of the set of test instructions.

According to a ninth aspect of the present disclosure, there is provided a computer program configured to cause a computer to perform the following, when executed: generating, using a test instruction synthesizer, a set of test instructions, wherein each one of the test instructions is configured to trigger a first network to change one or more technical characteristics of the first network, the test instructions not comprising configuration changes in nodes of the first network that are usable in changing the one or more technical characteristics of the first network, using in the generation of the set of test instructions, as input, a plurality of input instructions and a set of rules defining validity of test instructions, and wherein the test instruction synthesizer is configured to generate a test instruction from a first input instruction from among the plurality of input instructions either by replacing an element of the first input instruction with another element or by augmenting the first input instruction with a new element.

### BRIEF DESCRIPTION OF THE DRAWINGS

FIGURE 1 illustrates an example system in accordance with at least some embodiments of the present invention;
FIGURE 2A illustrates a generic diagram concerning generation of a set of test intents;
FIGURE 2B illustrates training of a GAN-based intent synthesizer;
FIGURE 2C illustrates use of a trained generator to produce synthetic intents;
FIGURE 2D illustrates universal dependencies of an example intent;
FIGURE 3 illustrates an example apparatus capable of supporting at least some embodiments of the present invention;
FIGURE 4 illustrates a process in accordance with at least some embodiments of the present invention, and
FIGURE 5 is a flow graph of a method in accordance with at least some embodiments of the present invention.

### EMBODIMENTS

It is herein disclosed, how test data may be generated in large quantities to test intent-based configuration systems, such that these configuration systems may subsequently be employed dependably to achieve technical objectives sought by operators. In detail, a machine learning mechanism or rule-based synthesizer is employed to generate the test data, such that confidence may be increased, that the network will respond in an expected manner to instructions given by human operators. Corner scenarios of network operation may be evaluated by generating and evaluating multiple intents to identify those, if any, which cannot be effectively implemented on the network. The network may comprise a communication network, such as a wired or wireless communication network, or a computation network, such as a computation cloud or grid, for example. In detail, the generated test data may comprise a set of test instructions, the test instructions being test intents.

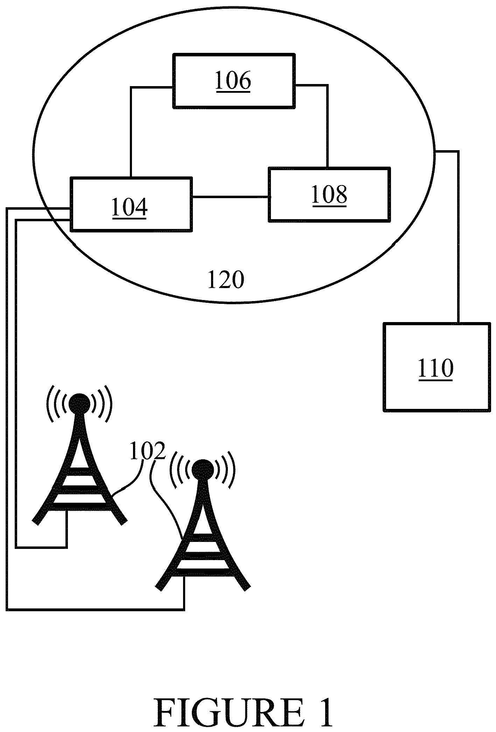

FIGURE 1 illustrates an example system in accordance with at least some embodiments of the present invention. The illustrated example system is a wireless communication network, which comprises a radio access network wherein are comprised base stations 102, and a core network 120 wherein are comprised core network nodes 104, 106 and 108. Depending on the technology used, base stations 102 may be referred to as access points, access nodes or node-b, eNb or gNb nodes. A network may have dozens, hundreds or even thousands of base stations. Examples of wireless communication networks include cellular communication networks and non-cellular communication networks. Cellular communication networks include wideband code division multiple access, WCDMA, long term evolution, LTE, and fifth generation, 5G, networks. Examples of non-cellular wireless communication networks include worldwide interoperability for microwave access, WiMAX, and wireless local area network, WLAN, networks.

Core network nodes 104, 106, 108 may comprise, for example, mobility management entities, MMEs, gateways, subscriber registries, access and mobility management functions, AMFs and serving general packet radio service support nodes, SGSNs. The core network nodes are logical entities, meaning that they may be physically distinct stand-alone devices or virtualized network functions, VNFs, run on computing substrates. In some network technologies, the radio access network comprises, in addition to base stations, also base station controllers. A network management device 110 is also comprised in the illustrated network. While a communication network is present in FIGURE 1, the methods disclosed herein are not limited thereto but can also be applied to a computation network.

Operators who manage the network may configure changes in the network by directly changing configuration parameters in the nodes, such as base stations 102, and individual ones of the core network nodes 104, 106, 108. By changing a configuration of a node it is herein meant modifying a configuration parameter of the node. Such configuration parameters may be stored in the node. Automated or semi-automated methods may be used in changing the configuration of the nodes.

In the case of base stations, a configuration change may comprise, for example, a change in maximum allowed transmit power, a change in frequency bands used by the base station, a change in quality of service offered to subscribers via cells controlled by the base station, and/or changes in information defining which subscribers or user equipments are barred from accessing one or more cells controlled by the base station.

In the case of core network nodes, a configuration change may comprise, for example, changes in routing tables defining how information is routed in the core network and with further networks, changes in core network node virtualization parameters, such as migrating a virtualized core network node to another physical computing substrate, and changes in quality of service, such as bandwidth, offered through sections of the network controlled by a certain core network node.

However, often operators want to achieve a change in a technical characteristic of the network as a whole, and it is not always immediately apparent how the individual nodes of the network should have their configurations changed to achieve the required change in the technical characteristic of the network. For example, the operators may want to reduce the size of cells in the centre part of the network in a uniform manner, a change which requires changing the configurations of a large number of base stations and, possibly, also core network nodes. To control the complexity of configuring networks and the need for dependable and rapid configuration, the concept of intent-based networking, IBN, has been explored. The intent is a high-level instruction which specifies the required outcome in terms of at least one change in a technical characteristic of the network, without stating explicitly how this change should be achieved. In other words, the intent does not comprise explicit configuration changes of individual nodes, rather, it may be interpreted to derive from it a set of explicit configuration changes in individual nodes which, when made, cause the desired change in the technical characteristic of the network to occur. An intent fulfilment system, IFS, is configured to interpret the intents and generate the set of explicit configuration changes in individual nodes from the intent.

Use of intents implies that management of the network is partly, in the detailed level, removed from human operators. However, before the human operator can give away such control, they need to be sure that the IFS can effectively fulfil the intents as desired, that is, the operator needs to test the IFS with different intents and see if all those intents are fulfilled as desired. This testing requires a sufficiently large set of test intents, these being test instructions wherein each one of the test instructions is configured to trigger the network to change one or more technical characteristics of the network, the test instructions not comprising explicit configuration changes in individual nodes of the network. The technical characteristic of the network in thus distinct from configuration changes in an individual node or nodes. The change in the technical characteristic of the network is an outcome of the configuration changes in the individual node or nodes.

The intents in the set of test intents should be valid in the sense that they produce a meaningful change in one or more technical characteristics of the network. Further, they should exhibit sufficient variety to enable testing a broad range of possible changes that operators might want to make in the network, that is, the test intents should span a large enough subset of modification space. Further, it would be useful if individual ones of the test intents could be combined to generate a new intent. For example, combining two intents may result in a combined intent which triggers the network to change technical characteristics as triggered separately by the two intents. Crafting test intents by hand is slow, error-prone and also prone to the risk that the crafted test intents do not cover all the changes that operators might like to make in the network. Processes are disclosed herein to generate a high-quality set of test intents. A network tested with such a high-quality set of test intents enjoys the technical benefit of being more dependable in its response to configuration, which in turn enhances the availability of the network since error conditions and outages are rarer. The generated set of test intents is a technical tool to verify the network is dependably configurable. In particular, the generated set of test intents may be used to test the IFS.

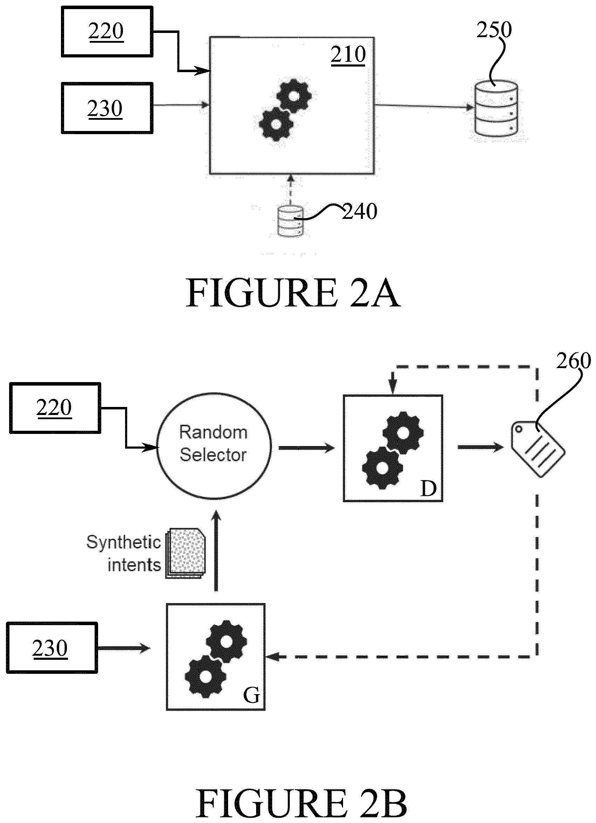

FIGURE 2A illustrates a generic diagram concerning generation of a set of test intents. Intent synthesizer 210 takes as inputs a set of example intents 220, the set 220 being generated carefully by humans, the set 220 not necessarily being very extensive. Further, intent synthesizer 210 may take as input rules 240 and a block of text 230, to output the set of test intents 250. The block of text may be extracted from a book, newspaper or messaging forum, for example, its purpose being to contain a syntactic diversity that intent synthesizer 210 uses to generate the set of test intents 250 to have sufficient diversity to cover a broad range of network configuration needs.

Intent synthesizer 210 may comprise a machine learning mechanism trained to learn the structure and characteristics of realistic and feasible intents, such that the intent synthesizer 210 may generate synthetic intents with the same structure as the input intents. Herein, where information elements of the output intents need to be identified, the input intents may be labelled accordingly, and where information elements do not need to be identified, intent synthesizer 210 may be configured to generate unlabeled intents. Unlabeled intents may be expressed in in plain natural language, for example. In particular, intent synthesizer 210 may be implemented as a machine learning mechanism, such as a generative adversarial network, GAN, or a variational autoencoder, VAE. Another option, where the intent synthesizer 210 is not a machine learning mechanism, is where the intent synthesizer 210 is a rule-based pipeline, as will be described in more detail herein below. As noted above, in using a machine learning mechanism to generate the set of test intents, a block of text may be used to introduce randomness and variation into the generation process.

In general, a GAN may be used to generate a class of data, such as a string with certain characteristics, from noise. Relatedly, a GAN-based intent synthesizer 210 may be used to generate an intent as a string that matches a certain format and whose elements have certain characteristics. In a GAN, two types of algorithms are used: a generative algorithm, or simply the generator, G and a discriminative algorithm or simply the discriminator D.

In a GAN-based intent synthesizer 210, a generator neural network generates an intent with a given generator distribution, which before the generator is trained, does not yet match characteristics of real intents, since at that point the generator does not yet know how to generate correct intents. The discriminator neural network, D, may be described as a function that maps from intents to a probability that the given intent is from the real intent set 220, and not generated by the generator G.

For a fixed generator, G, the discriminator, D, is trained to classify the intents as either being a real sample (that is, from real training intent set 220) in which case the probability is close to 1 or from a fixed generator of fake intents for which the probability should be close to 0. The goal is to determine if the intent is realistic, that is, if its structure matches the expected structure and its content matches the expected content that can be related to the network on which the intent is to be used. The discriminator evaluates if the intent is "real" or "synthetic" based on the features of the intent which include its structure or format as well as its content. Thus for an intent, x, based on the correlations learned during a training process, the discriminator maps the features of the intent x to compute a probability p(x), which is the estimated probability that the output label is "realistic".

On the other hand, the job of the generator is exactly the opposite of that of the discriminator. Assuming an intent is accurate, the generator finds the likelihood of the features x in it. To put it mathematically, when fully trained the generator will seek to maximize probability p(x) assigned by the discriminator to an intent is has generated.

The proposed GAN-based method assumes that there is the dataset of valid intents 220, whose intents that serve as an initial truth. This intent database 220 may be populated with real-life intents created beforehand by skilled humans, such as operators or system engineers, for example. Since the intents in the intent database 220 serve as the ground truth and the synthetic intents are developed based on the intents in the intent database 220, the intents in the intent database 220 need to be error free and suitable to use in the network in question. For example, the input intents in database 220 should be structured according to the expected intent structure and these input intents should have values that represent realistic expected value ranges for the different parameters.

Training of a GAN-based intent synthesizer 210 will next be described in connection with FIGURE 2B. The desired outcome of this process is to generate multiple synthetic intents for set of test intents 250, while at the same time ensuring that the intents are valid to be used in real life, and sufficiently diverse. Therefore, the generator G should learn to generate intents whose structure and content matches real intents while discriminator D should learn to distinguish between real and un-real intents.

For each round of training, the generator G produces a synthetic intent while a real intent is selected from the intent database 220. One of these two intents is randomly selected to be given to the discriminator D, that is, each of the two intents has a 50% chance of being forwarded to the discriminator D. The discriminator then determines a probability value p(x)=[0,1] which signifies the probability in the range 0 and 1, that the discriminator considers the input intent to be real. A probability 260 of zero, or close to zero, denotes that the discriminator D believes the intent is from generator G, and a probability 260 of one, or close to one, denotes that the discriminator D believes the intent is from intent database 220. A probability 260 around 0,5, allowing a suitable margin of error, denotes that the discriminator is unsure as to where the intent is from.

A loss, the difference of between probability 260 and the correct value, zero or one, is computed on the outcome of the discriminator D, the loss being then used to update neural network weights for both the generator G and the discriminator D. The target of the discriminator D is to minimize the loss while target of the generator G is to maximize this loss. Accordingly, since the same loss backpropagates through both the generator G and discriminator D, training of the GAN may proceed in alternating steps which are repeated until convergence is achieved. The alternating steps comprise that the discriminator D is trained for one or more rounds while the generator G is kept fixed, and/or that the generator G is trained for one or more rounds while the discriminator D is kept fixed. After the discriminator D and generator G are trained individually, both of them may be trained as described above, until the training converges. In some embodiments, the discriminator and generator are trained concurrently without keeping either fixed, which training method works best depends on specifics of the practical embodiment and the characteristics of the network that is to be managed using the eventual intents.

Concerning training of the discriminator D, any suitable kind of binary classifier may be used as a suitable algorithm for the discriminator, an example being a neural network. The classifier used in discriminator D may be customized based on the requirements of identifying a correctly formed intent. The training process of the discriminator may comprise, for example, the following steps:

Firstly, the discriminator is given an intent for to be classified. This intent originates either from the intent database 220 or from the generator with equal probability.

Secondly, the discriminator assigns a score between 0 and 1 to the input intent. This score signifies the probability that the discriminator considers the input intent to be a real intent, as opposed to one from generator G. A score of 1 means that the discriminator considers the intent to be a real intent coming from intent database 220 and a score of 0 means that the discriminator D considers the intent to be a fake intent developed by generator G.

Thirdly, the loss is calculated. As such, an example loss function is L_{D} = log (D(x)) + log (1 - D(G(z))), where G(z) is the generator's output given input text z and D(G(z)) is the discriminator's estimate of the probability that a generator-generated intent is real. The discriminator always tries to maximize L_{D}. The loss is then backpropagated through the discriminator to adjust the weights in the neural network, for example, where the discriminator is a neural network.

Concerning training of the generator G, the generator G may be implemented by using text generative models like GPT2, distilgpt2, or others. The generator algorithm takes some randomness from block of text 230 and creates an intent out of it. By introducing randomness in the input dataset of generator G, the generator is triggered to produce a diverse set of intents. During the training process of the generator, the following steps follow:

Firstly, generator G samples some random words or sentences from block of text 230 and creates a synthetic intent from this input. The intent is then provided to discriminator D for classification. Secondly, discriminator D classifies the intent as authentic or generated and returns a probability, a number between 0 and 1, with 1 representing "authentic" and 0 representing "generated".

Thirdly, from the discriminator classification, the loss is calculated. As such, one example loss function is L_{G} = log (1 - D(G(z))). The generator always tries to minimize L_{G}. The loss is then backpropagated through the generator to obtain gradients, which are used to change the weights in the generator G.

After the generator G and discriminator D are trained separately, they may be then further trained concurrently to teach them how to compete. In some embodiments, they are not trained separately at all but simply trained concurrently from the start until the training converges. Whether this is feasible depends on specifics of the implementation.

When trained concurrently, the computed loss is concurrently fed to both generator G and discriminator D, but with each using its own loss function as described above. The computed losses are then concurrently respectively backpropagated in the neural networks of generator G and discriminator D and used to respectively update the neural network weights in each of the two neural networks. As the performance of generator G improves with the training, the performance of discriminator D will decline, since for the discriminator it becomes more and more difficult to distinguish between the intents coming from the intent database 220 and those produced by generator G. If the generator succeeds in matching the quality of intents from intent database 220, the discriminator will no longer be able to distinguish real intents from generated ones, and will consistently predict a probability of 0,5 for all inputs. At this point the generator G will have learned to generate synthetic intents which are equivalent to human-generated intents, and the generator G will now be able to generate synthetic intents that have the same structure and content values that are matched to real intents for the considered system. In other words, the drift of discriminator prediction to 0,5 may be considered a signal that the generator has been fully trained.

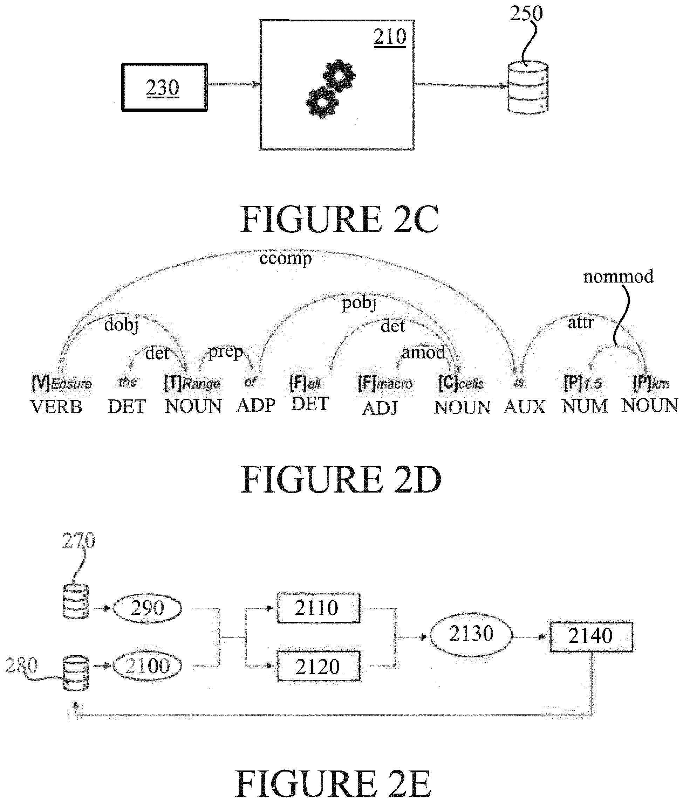

FIGURE 2C illustrates use of a trained generator to produce synthetic intents. After the training of the GAN converges, it discriminator D cannot distinguish between the intents from the intent database 220 and intents developed by the generator, that is, the intents produced by the generator are as good as those from intent database 220. The generator G can be used as such, even without the discriminator, as an intent synthesizer 210, in which case the input to the intent synthesizer 210 is a block of text 230, based on which new intents 250 are developed. By text it is herein meant simply normal text from a written source, such as a book, which has sentences of differing structures. The text may be the same, or different, from the text used during training.

As an alternative to GAN-based test intent generation, a rule-based synthesizer may be employed to generate the test intents. A prerequisite for the synthesizing procedure of natural-language intents is to parse the natural language intents, which are sentences, in a defined format that annotates the respective sentence parts consistently. The outcome of the parsing, called the formal intent, is the input to the synthesizer. The input data to the synthesis is defined as follows. Each intent is a natural language statement fitting a specific format that defines the sequence of information elements in the intent statement. An example intent is "Ensure that the range of all cells is 1.5 km".

The rule-based intent synthesizer takes structured intents fitting a given format, each input intent is a formal intent, e.g. produced by a human operator or automated parser that derives the formal intent from an equivalent natural language statement. Each formal intent is a mapping of the intent words/terms and their annotations that describe the information element/information content of the respective words in the intent statement. An example of such a format is the following:

"[V]Ensure the [T]range of [F]all [F]macro [C]cells is [P] 1,5 [P]km",
where V denotes a verb, corresponding to an action required to fulfil the intent. It is may be directly linked to an action in the underlying system. T denotes a target, which is an object related to the verb clause as it is in the linguistic pattern of subject-verb-object present in English and other languages. C denotes context, which is optional in an intent. The context defines the system or object the verb-target combination relates to. For example, "cell" or "base-station". The context defines which parameters are eligible for the intent. F denotes a filter, which can be applied to the target, context or the intent as a whole. Each filter increases the specificity of the element in question. P denotes a parameter, which is optional in an intent. Parameter values are given to the verb-target combination. For the verb "create" this is the object to create. For the target "range" it is an integer value.

Characteristics of a correct intent are that 1) the intent itself must start with the verb and the context, if it exists, must come after the target. 2) The annotation must tag the intent at word level, otherwise the proposed strategies may not work since they operate on word level. 3) The parser producing the annotation must be able to recognize word combinations that correspond to a single tag. For example, the words "base station" and "computing substrate" relate to a single logical object but the parser must annotate both words with the fitting tag. 4) Each tag must include information about the linguistic characteristics of the word the tag is applied to. This includes its parts-of-speech, POS, tag and relationship to other words in the sentence. For the English language, for example, the POS tag set may come from the Penn Treebank tagset [1] while the relationship annotation may use the universal dependencies, UD, [2] format. For the annotated intent above the UDs are illustrated by FIGURE 2D.

FIGURE 2E illustrates an example rule-based intent synthesis process. The synthesizing of new intents is based upon two methods present in FIGURE 2D: replacement and augmentation. replacement creates new intents by replacing tagged components in the existing intent while augmentation adds new components to existing intents. The synthesizing procedure relies on rules defined on the format. An example would be to replace parameters for a context only with parameters of the same format for this particular context. In the example above this means that the context "cells" and the target "range" can only have distance parameters.

FIGURE 2E comprises a rules database 270, an intent database 280, respectively providing to the process both synthesizer rules 290 and annotated intents 2100. The annotated intents may be human-generated, for example, to seed the process with correct intents. A synthesizer replace function 2110 and a synthesizer augment function 2120 provide synthesized annotated intents 2130 for an optional post-processing phase 2140, from where the intents are stored into the intent database 280, from where they may be used as inputs to further intent-generating rounds. Where post-processing phase 2140 is absent, the annotated intents 2130 may be stored into intent database directly from phases 2110 and 2120.

Replacement takes a tagged part of an existing intent and replaces it with other parts without affecting syntactic and semantic correctness of the intent. The replacement part may be another tagged component from a different intent, for example. To produce semantically and grammatically correct intents, a rule set defines the preconditions, rules, that the chosen replacement word, or words, must satisfy.

Example rules for the replacement may include, for example:
R1: For a given parameter type, the values on a parameter of that type should only be replaced by values in the same units that fall within a specified range. For example, the rule could require that for distance parameters, distance values should only be replaced with other distance values that have the same unit and lie within the range of +-15% of the current value.
R2: Parameters for a certain target may only be replaced by other parameters seen previously with the same target.
R3: Targets can only be replaced with other targets that have been previously occurred in the same context.
R4: Filter groups, such as a single logical filter consisting of multiple words, must be replaced as whole.
R5: Parameter groups must be replaced as a whole.
R6: Filters applied to the whole intent can be replaced regardless of verb, target and parameters with other filters applied to whole intents.
R7: Quantifying filters can be replaced with other quantifying filters.
R8: Adjective filters can be replaced with other adjective filters that were applied to the same element.
R9: Logical filters can be replaced with other logical filters that were applied to the same element.
R10: The placed element must have the same tense as the replaced element.
R11: Quantifying filters for a context element can be replaced by attribute filters that have been previously used in the same context.
R12: Location filters can only be replaced by other location filters.
R13: Logical combinations of filters, parameters or other parts can be replaced by replacing the logical operator, e.g. "and" "or", with another logical operator.

A rule set used in synthesizing new intents may comprise, for example, some or all of the rules listed above as R1 - R13. The rule-based replacement may be implemented in multiple ways: In some embodiments the rules are executed sequentially, where for an existing intent ***I*** and all its tagged parts. The synthesizer first takes all other intents with all their tagged parts and produces all possible permutations, the synthetic intents **SI**, of these against the intent ***I***. Afterwards each generated synthetic intent is checked and discarded if it disregards or conflicts with any one of the defined rules.

In other embodiments waste of generated intents is minimized by creating a large number of permutations that are later unusable, the existing intents are filtered to avoid creating unwanted intents. The synthesizer may apply a specific a routine for each defined rule that filters the existing intents before creating the permutations and eliminates those that disregard that rule. Permutations are then produced by that rule on the remaining intents. This allows executing each rule-based replacement independently and even in parallel. Both approaches of the replacement process can produce duplicate intents, which may then be filtered in the post-processing step 2140.

Augmentation adds new components to existing intents to synthesize new intents from earlier ones. These new parts can come from other existing intents or are purely synthetic. Rules similar to the replacement-based approach are applied to decide where in the intent utterance the part is inserted, in what tense, and under which preconditions. Relatedly, the application of the rules can be implemented in the same way.

Example rules for augmentation include:
Rule 1: A context can only be augmented with attributes that are tagged generic or with attributes seen in other intents with same context.
Rule 2: Filters that apply to the intent sentence as a whole, for example, "*on Wednesday*"*,* can always be applied.
Rule 3: If a filter that is applied to the whole sentence is added, and another is already present, they must be connected logically to determine their relation, for example by "and" or "or".
Example: The intent ends on "on Wednesdays" and the filter "in Munich" is added. Both can be combined differently "on Wednesdays and in Munich" or "on Wednesdays or in Munich" producing different semantics.
Rule 4: Quantifying context filters can be added safely if there have been quantifying filters on the context element in the past.
Rule 5: Quantifying filters on the context element can be added greedily but might produce invalid intents.
Rule 6: The unit of parameter values can exchange with the same, or different, value of the same type but different unit, e.g., "1.5km" can be augmented as " 1500m".

An example synthesis by augmentation:
Intent 1: "Ensure the range of cells is 1.5 km."
Intent 2: "Ensure the range of micro cell = x is 500m"

Using the two rules, Intent 1 can be augmented such that the context in Intent 1 can be augmented with the attribute "micro". The intent itself can also be augmented by a Filter "on Wednesday". The permutation of these possibilities leads to three new intents out of intent 1:
"Ensure the range of micro cells is 1.5km"
"Ensure the range of cells is 1.5km on Wednesday"
"Ensure the range of micro cells is 1.5km on Wednesday"

In some embodiments, the replacement and augmentation may be performed using, further, the system's documentation. For example, given an intent that applies to a particular network domain or function, such as the radio domain of a particular vendor, new intents may be derived by replacing the parameters in the intent with other parameters read from the domain's documentation that apply to the same domain as the input intent.

Benefits of the disclosed test intent generation processes include the capability to synthetically produce intents which typically serve to simplify the production of intents to be used to test IBN solutions. This enables the operator to evaluate the behaviour/responses of the IBN solution to different desired outcomes without having to think and write out these potential intents manually. Further, given an IFS that the operator is sure of its effectiveness, the invention can be used to evaluate corner scenarios of the network operation by generating and evaluating multiple intents to see those that cannot be effectively implemented on the network. The ability to synthesise intents also allows the operator and IFS to evaluate fulfilment strategies before such intents are needed, i.e. the operator or the IFS is able to evaluate the intent that may not be needed at the time but that could be required in future. And at the time of synthesis, the operator/ IFS can evaluate the alternative fulfilment strategies and determine the best to deploy when such intent is actually needed.

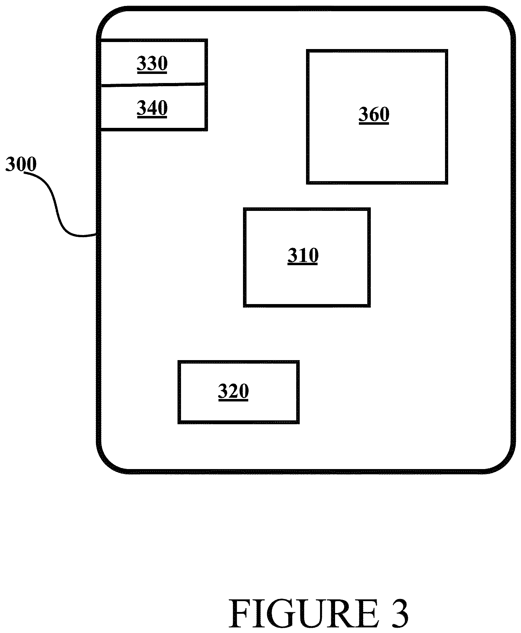

FIGURE 3 illustrates an example apparatus capable of supporting at least some embodiments of the present invention. Illustrated is device 300, which may comprise, for example, a network management device 110 of FIGURE 1. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices Corporation. Processor 310 may comprise at least one AMD Opteron and/or Intel Xeon processor. Processor 310 may comprise at least one application-specific integrated circuit, ASIC. Processor 310 may comprise at least one field-programmable gate array, FPGA. Processor 310 may be means for performing method steps in device 300, such as generating, using, replacing, augmenting and employing. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with a suitable communication standard.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure IBN parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

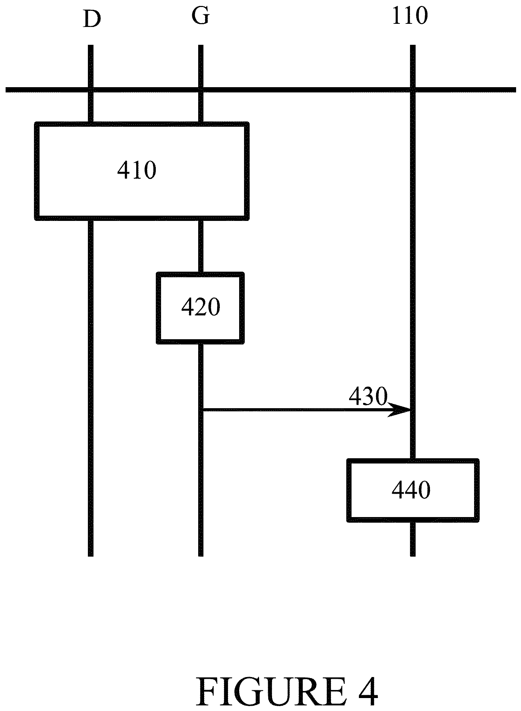

FIGURE 4 illustrates a process in accordance with at least some embodiments of the present invention which use GAN. On the vertical axes are disposed, from the left, discriminator D, generator G and network management device 110. Time advances from the top toward the bottom. Another device of the network than the network management device 110 may take the place of device 110.

In phase 410, a GAN-based intent generator is trained, as described herein above. Once discriminator D trends to predicting equal likelihoods, within a margin of error, the generator G is considered trained. As stated herein above, the training process 410 takes input from a set of example intents 220 and a block of text 230.

Once generator G is trained, the generator is used to generate a set of test intents, in phase 420. The set of test intents may be communicated to the network in phase 430, and used by the network, phase 440, to verify that the network can be dependably configured using intent-based configurations. Problem scenarios identified in the verification 440 may be indicated to human users, to enable operators and engineers to fix them before they result in service outage of the network, for example. Following phase 440, the network may be operated and reliably configured using intents.

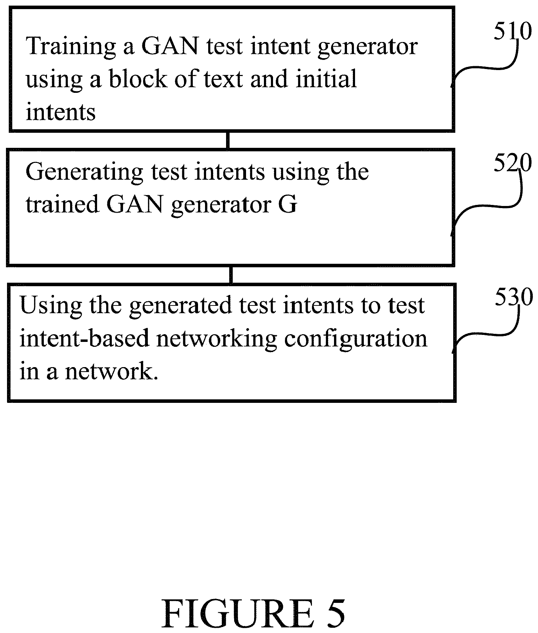

FIGURE 5 is a flow graph of a method in accordance with at least some embodiments of the present invention. Phase 510 comprises training a GAN-based test intent generator using a block of text and initial intents. The initial intents may be human-generated, for example. Phase 520 comprises generating a set of test intents using the trained GAN generator G. Phase 530 comprises using the generated test intents to test intent-based networking configuration in a network.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in managing networks, such as communication or computation networks.

### ACRONYMS LIST

- AI: artificial intelligence
- GAN: generative adversarial network
- GPT2: generative pre-trained transformer 2 (an open-source AI by OpenAI)
- IBN: intent-based networking
- IFS: intent fulfilment system
- VAE: variational autoencoder

**REFERENCE SIGNS LIST**

| | |
|---|---|
| 110 | network management device |
| 120 | core network |
| 102 | base stations |
| 104, 106, 108 | core network nodes |
| 210 | intent synthesizer |
| 220 | set of example intents |
| 230 | block of text |
| 240 | input rules |
| 250 | generated test intents |
| 260 | probability |
| 270 - 2140 | phases of the method of FIGURE 2E |
| 300 - 360 | structure of the device of FIGURE 3 |
| 410 - 440 | phases of the method of FIGURE 4 |
| 510 - 530 | phases of the method of FIGURE 5 |

### CITATIONS

[1] https://www.ling.upenn.edu/courses/Fall_2003/ling001/penn_treebank_pos.html
[2] https://universaldependencies.org/u/dep/

## Claims

1. An apparatus (300) comprising means for (310, 320):
- generating, using a test instruction synthesizer (210, 2110, 2120), a set of test instructions (250), wherein each one of the test instructions (250) is configured to trigger a first network to change one or more technical characteristics of the first network, the test instructions (250) not comprising configuration changes in nodes of the first network that are usable in changing the one or more technical characteristics of the first network;
- using in the generation of the set of test instructions (250), as input, a plurality of input instructions (280) and a set of rules (270) defining validity of test instructions, and wherein
- the test instruction synthesizer (210, 2110, 2120) is configured to generate a test instruction (250) from a first input instruction from among the plurality of input instructions (280) either by replacing (2110) an element of the first input instruction with another element or by augmenting (2120) the first input instruction with a new element.

2. The apparatus (300) according to claim 1, wherein the replaced (2110) element is a parameter, and the apparatus (300) is configured to replace (2110) the parameter of the input instruction with a replacement parameter from another one of the input instructions (280), the replacement parameter occurring in the another one of the input instructions (280) in relation to a same target as the replaced parameter in the first input instruction.

3. The apparatus (300) according to claim 1 or 2, wherein the replaced element is a target, and the apparatus (300) is configured to replace (2110) the target of the input instruction with a replacement target from another one of the input instructions (280), the replacement target occurring in the another one of the input instructions (280) in a same context as the replaced target in the first input instruction.

4. The apparatus (300) according to any of claims 1-3, wherein the apparatus (300) further comprises means for augmenting (2120) the first input instruction with the new element by adding an attribute to the first input instruction, wherein the apparatus (300) is configured to only add the attribute to the first input instruction if the attribute is tagged as generic, or if the attribute occurs in another one of the input instructions (280) in the same context as in the first input instruction.

5. The apparatus (300) according to any of claims 1-4, wherein the first network is either a computation network or a communication network.

6. The apparatus (300) according to any of claims 1-5, wherein the apparatus (300) further comprises means for employing the set of test instructions (250) in testing a configuration mechanism of the first network, or delivering the set of test instructions (250) for testing the configuration mechanism of the first network.

7. A method, comprising:
- generating, using a test instruction synthesizer (210), a set of test instructions (250), wherein each one of the test instructions (250) is configured to trigger a first network to change one or more technical characteristics of the first network, the test instructions not comprising configuration changes in nodes of the first network that are usable in changing the one or more technical characteristics of the first network;
- using in the generation of the set of test instructions (250), as input, a plurality of input instructions (280) and a set of rules (270) defining validity of test instructions, and wherein
- the test instruction synthesizer (210) is configured to generate a test instruction from a first input instruction from among the plurality of input instructions (280) either by replacing (2110) an element of the first input instruction with another element or by augmenting (2120) the first input instruction with a new element.

8. The method according to claim 7, wherein the replaced element is a parameter, and the method comprises replacing (2110) the parameter of the input instruction with a replacement parameter from another one of the input instructions (280), the replacement parameter occurring in the another one of the input instructions (280) in relation to a same target as the replaced parameter in the first input instruction.

9. The method according to claim 7 or 8, wherein the replaced element is a target, and the method comprises replacing (2110) the target of the input instruction with a replacement target from another one of the input instructions (280), the replacement target occurring in the another one of the input instructions (280) in a same context as the replaced target in the first input instruction.

10. The method according to any of claims 7 - 9, wherein the method comprises augmenting (2120) the first input instruction with the new element by adding an attribute to the first input instruction, wherein the method comprises only adding the attribute to the first input instruction if the attribute is tagged as generic, or if the attribute occurs in another one of the input instructions (280) in the same context as in the first input instruction.

11. The method according to any of claims 7 - 10, wherein the first network is either a computation network or a communication network.

12. The method according to any of claims 7 - 11, further comprising employing the set of test instructions (250) in testing a configuration mechanism of the first network, or delivering the set of test instructions (250) for testing the configuration mechanism of the first network.

13. A computer program configured to cause a computer (300) to perform the following, when executed:
- generating, using a test instruction synthesizer (210), a set of test instructions (250), wherein each one of the test instructions (250) is configured to trigger a first network to change one or more technical characteristics of the first network, the test instructions (250) not comprising configuration changes in nodes of the first network that are usable in changing the one or more technical characteristics of the first network;
- using in the generation of the set of test instructions (250), as input, a plurality of input instructions (280) and a set of rules (270) defining validity of test instructions, and wherein
- the test instruction synthesizer (210) is configured to generate a test instruction from a first input instruction from among the plurality of input instructions (280) either by replacing (2110) an element of the first input instruction with another element or by augmenting (2120) the first input instruction with a new element.
